# DEMANDE DE BREVET EUROPEEN

(11) **EP 2 835 768 A1**
(43) Date de publication de la demande: **11.02.2015**
(21) Numéro de dépôt: 14178864.6
(22) Date de dépôt: 29.07.2014
(51) Int. Cl.: G06K 19/077

(54) **Carte à puce et procédé de fabrication d'une telle carte à puce**

(30) Priorité: 06.08.2013 FR 1357811
(71) Demandeur: Oberthur Technologies, 92700 Colombes (FR)
(72) Inventeur: Bertin, Marc, 92700 COLOMBES (FR); Launay, François, 92700 COLOMBES (FR)
(74) Mandataire: Delumeau, François Guy

(57) **Abrégé**

L'invention concerne une carte à puce (15) comprenant :
- un module (20) comportant un substrat (22) comprenant au moins un plot de contact (26) sur une première face (22b) du substrat et une puce (24) montée sur une deuxième face (22a) du substrat, la puce (24) étant reliée électriquement au plot de contact (26) ; et
- un corps de carte comportant au moins une première couche (4) délimitée par une face externe (4a) et une face interne (4b) ; dans laquelle :
- la première couche (4) comporte au moins un orifice traversant (10) adapté pour recevoir au moins un dit plot de contact (26) ; et
- le module (20) est fixé au corps de carte de sorte que la première face (22b) du module est montée en appui contre la face interne (4b) de la première couche (4), ledit au moins un plot de contact (26) étant engagé dans l'orifice (10) de façon à être accessible par un dispositif externe depuis la première face (4a) du corps de carte.

## Description

La présente invention concerne les cartes à puce ainsi que la fabrication de telles cartes. L'invention porte plus particulièrement sur la fabrication de cartes à puce comprenant un module muni d'une puce et de plots de contact, ces plots de contact étant accessibles par un dispositif externe à la carte.

L'invention s'applique notamment, mais de façon non exclusive, aux cartes à puce conformes au standard ISO 7816.

L'utilisation des cartes à puce est aujourd'hui largement répandue dans la vie quotidienne. De telles cartes sont par exemple utilisées comme cartes bancaires, cartes de fidélité, cartes d'accès etc. et peuvent prendre divers formats selon leur utilisation respective.

Les cartes à puce respectent généralement un format dont les dimensions sont normalisées. Les cartes de crédit, par exemple, sont généralement conformes au format ISO ID-1 défini par la norme ISO 7816 (équivalent au format « 1FF » (FF pour « Form Factor »)). Les cartes SIM sont quant à elles généralement conformes au format 2FF (« Mini-SIM »), 3FF (« Micro-SIM ») ou 4FF de la norme ISO 7816.

De façon connue, une carte à puce comprend généralement un corps de carte comportant une puce électronique apte à traiter des signaux et à réaliser divers fonctions selon l'utilisation souhaitée de la carte. Des plots de contact (ou plage de contact) reliés électriquement à la puce sont ménagés à la surface du corps de carte de façon à être accessibles par un dispositif de lecture externe.

Le document US 4,222,516 propose un procédé de fabrication d'une carte à puce 100 dotée de tels plots de contact. Comme représenté en **figure 1****,** ce document prévoit en particulier le montage dans un corps de carte 102 d'un module 120, ce module comportant une puce 124 et des contacts 126 sur une même face d'un substrat 122. Le module 120 est introduit dans une cavité 108 ménagée dans le corps de carte 102 de sorte que les contacts 126 du module 120 sont en vis-à-vis d'orifices traversants 110 formés au préalable dans la couche supérieure 104 du corps de carte. La puce 124 est ici fixée au substrat 122 du module 120, ce substrat 122 étant lui-même attaché à une couche inférieure 106 du corps de carte de sorte que les contacts 126 soient visibles à travers les orifices traversants 110.

Un dispositif de lecture externe peut ainsi communiquer avec la puce 124 via les plots de contact 126 accessibles depuis la face supérieure 104 de la carte 100.

Cependant, la norme ISO 7816 impose à présent que la différence de hauteur entre la face libre des plots de contact et la face supérieure du corps de carte soit comprises entre 0 et 100 µm. Autrement dit, chaque plot de contact doit être agencé de sorte que sa surface libre (sur laquelle doit se faire le contact avec un dispositif externe) ne soit pas à plus de 100 µm de distance de la surface supérieure du corps de carte sur laquelle débouchent les plots de contact. La face libre des plots de contact peut être positionnée en retrait vis-à-vis de la face externe du corps de carte (de façon à former des renfoncements) ou en saillie, selon le cas.

Afin de respecter les contraintes ci-dessus imposées par la norme ISO 7816, il est donc nécessaire de contrôler avec précision le positionnement en hauteur des plots de contact vis-à-vis de la face supérieure du corps de carte.

Or, la déposante a observé que la conception de la carte 100 proposée dans le document US 4,222,516 n'est pas optimale et ne permet pas en particulier de maîtriser avec précision le positionnement de la face libre des plots de contact 126 vis-à-vis de la face supérieure 104a de la couche supérieure 104. Dans ce document, les plots de contact 126 du module 120 ne s'engagent pas dans les orifices 110 correspondants mais sont simplement positionnés en alignement à l'entrée des orifices 110. Ceci rend difficile le respect de la norme ISO 7816 stipulant une différence de hauteur maximale de 100 µm. De plus, quand bien même un engagement serait opéré, il ne serait pas possible de contrôler précisément la profondeur d'engagement des plots de contact 126 dans les orifices correspondants.

Cette imprécision résulte en particulier du fait que la position en hauteur des plots de contact 126 vis-à-vis de la face externe 104a de la couche supérieure 104 est directement liée aux imprécisions en épaisseur de la couche supérieure 104 et aux imprécisions du positionnement de la couche inférieure 106 par rapport à la couche supérieure 104 dues notamment à l'épaisseur de l'adhésif (non représenté) à l'interface de collage entre les couches supérieure et inférieure 104, 106.

Il est donc nécessaire d'améliorer le contrôle du positionnement en hauteur des plots de contact des cartes à puce vis-à-vis de la face externe du corps de carte afin, par exemple, de satisfaire à la norme ISO 7816, et plus généralement, pour permettre un accès dans de bonnes conditions à un dispositif de lecture externe prévu à cet effet.

### Objet et résumé de l'invention

A cet effet, la présente invention concerne une carte à puce comprenant :
- un module comportant un substrat comprenant au moins un plot de contact sur une première face du substrat et une puce montée sur une deuxième face du substrat opposée à ladite première face, la puce étant reliée électriquement audit plot de contact ; et
- un corps de carte comportant au moins une première couche (ou couche supérieure) délimitée par une face externe et une face interne ;
   dans laquelle :
- la première couche comporte au moins un orifice traversant adapté pour recevoir au moins un dit plot de contact ; et
- le module est fixé au corps de carte de sorte que la première face du module est montée en appui contre la face interne de la première couche, ledit au moins un plot de contact étant engagé dans l'orifice de façon à être accessible par un dispositif externe depuis la première face du corps de carte.

Le procédé de fabrication de l'invention permet avantageusement de contrôler avec précision la différence de hauteur pouvant exister entre la face externe de la première couche et la surface libre de chaque plot de contact une fois le module en position sur la face interne de la première couche.

L'invention permet ainsi d'améliorer le positionnement des plots de contact par rapport à la face supérieure (ou face avant) de la carte à puce, ce positionnement étant critique pour permettre un accès dans de bonnes conditions d'un dispositif externe aux plots de contact de la carte. Le positionnement en hauteur des plots de contact n'est en effet plus dépendant des variations en épaisseur de la couche supérieure et/ou en positionnement de la couche inférieure (ou deuxième couche) ou encore d'une couche adhésive pouvant se trouver entre les couches supérieure et inférieure du corps de carte.

Il est ainsi possible, pour un corps de carte donné, de sélectionner parmi plusieurs modules afin d'y monter le module le plus adapté selon les besoins (le module ayant en particulier l'épaisseur de plot de contact souhaitée), de sorte à obtenir la différence de hauteur souhaitée entre la face avant de la carte et les surfaces libres des plots de contact. Un même corps de carte pourra ainsi accueillir des modules ayant différentes tailles de plot de contact.

Dans un mode de réalisation particulier, la différence de hauteur entre la surface libre du plot de contact et la face externe de la première couche est comprise entre 0 et 100 µm (en valeur absolue). Autrement dit, l'écart de niveaux entre la surface de contact des plots et la face avant de la carte est compris entre -100 µm et +100 µm comme expliqué plus en détail ultérieurement.

Dans un cas particulier, la surface libre d'au moins un (ou de chaque) plot de contact affleure la face externe de la première couche.

Les plots de contact sont par exemple des plages de contact conformes à la norme ISO 7816.

Dans un mode de réalisation particulier, le corps de carte comprend une deuxième couche (ou couche inférieure) s'étendant sur la face interne de la première couche, les première et deuxième couches délimitant collectivement une cavité dans laquelle est inséré le module.

Dans un mode de réalisation particulier, les première et deuxième couches sont deux parties intégrantes d'une même pièce. Ces deux couches sont par exemple réalisées ensemble par moulage.

Dans un mode de réalisation particulier, la cavité débouche sur la face externe de la deuxième couche opposée à la face interne de la première couche, la carte à puce comprenant en outre des moyens de fermeture de la cavité comprenant au moins l'un parmi :
(a) de la résine injectée ou coulée dans la cavité ;
(b) une troisième couche fixée sur la face externe de la deuxième couche de façon à recouvrir la cavité ;
(c) une couche de résine moulée formée sur la deuxième face du module préalablement à son insertion dans la cavité ; et
(d) un dispositif électronique (tel qu'un écran LCD ou une batterie par exemple) fixé sur la face externe de la deuxième couche de façon à recouvrir la cavité.

Selon une variante particulière, les moyens de fermeture sont formés par la troisième couche définie ci-dessus en (b), la puce étant recouverte d'une résine d'enrobage formée sur la deuxième face du module préalablement à l'insertion du module dans la cavité, le module étant fixé (ou maintenu) à la troisième couche au moyen d'un élément adhésif disposé entre la résine d'enrobage et la troisième couche.

Cette variante particulière permet de former un lien (ou entretoise) entre la résine du module enrobant la puce et la troisième couche. Cette variante permet d'améliorer la résistance du module aux contraintes mécaniques telles que la pression par exemple.

Dans un mode de réalisation particulier, le substrat du module comprend une pluralité de plots de contact sur sa première face, chaque plot étant engagé dans un orifice traversant dédié de la première couche.

Dans un mode de réalisation particulier, le substrat du module comprend une pluralité de plots de contact sur sa première face, les plots de contact étant adjacents les uns aux autres de sorte qu'ils sont engagés dans un même orifice traversant de la première couche.

Dans un mode de réalisation particulier, chaque plot de contact présente une forme et des dimensions complémentaires à l'orifice traversant correspondant.

Dans une variante de réalisation, le module comporte un composant électronique, tel qu'un afficheur, un capteur d'empreinte ou une diode électroluminescente, disposé sur la première face du module, et dans laquelle la première couche comprend en outre un orifice supplémentaire, le composant électronique étant inséré dans l'orifice supplémentaire de sorte à être accessible depuis la première face du corps de carte. Une fois inséré dans l'orifice supplémentaire, le composant électronique peut ainsi être accessible visuellement ou tactilement depuis la face externe du corps de carte.

Corrélativement, l'invention porte sur procédé de fabrication d'une carte à puce comprenant :
- un module comportant un substrat comprenant au moins un plot de contact sur une première face du substrat et une puce montée sur une deuxième face du substrat opposée à la première face, la puce étant reliée électriquement audit plot de contact ; et
- un corps de carte comportant au moins une première couche délimitée par une face externe et une face interne ;
   le procédé de fabrication comprenant :
- la formation dans la première couche d'au moins un orifice traversant adapté pour recevoir au moins un plot de contact ; et
- la fixation du module au corps de carte de sorte que ladite première face du module est montée en appui contre la face interne de la première couche, ledit au moins un plot de contact s'engageant dans ledit orifice de façon à être accessible par un dispositif externe depuis la première face du corps de carte.

Dans un mode de réalisation particulier, la différence de hauteur entre la surface libre du plot de contact et la face externe de la première couche est comprise entre 0 et 100 µm (en valeur absolue). Autrement dit, l'écart de niveaux entre la surface de contact des plots et la face avant de la carte est compris entre -100 µm et +100 µm comme expliqué plus en détail ultérieurement.

Dans un mode de réalisation particulier, la surface libre d'au moins un (ou de chaque) plot de contact affleure la face externe de la première couche.

Dans un mode de réalisation particulier, le corps de carte comprend une deuxième couche s'étendant sur la face interne de la première couche, le procédé comprenant la formation d'une cavité dans ladite deuxième couche, une portion de la face interne de la première couche formant le fond de ladite cavité,
la fixation dudit module comprenant l'insertion du module dans la cavité et le montage du module sur le fond de la cavité.

Dans un mode de réalisation particulier, les première et deuxième couches sont deux parties intégrantes d'une même pièce. Celles-ci sont par exemple réalisées ensemble par moulage.

Dans un mode de réalisation particulier, chaque plot de contact présente une forme et des dimensions complémentaires à l'orifice traversant correspondant.

Dans un mode de réalisation particulier, la cavité débouche sur la face externe de la deuxième couche opposée à la face interne de la première couche, le procédé comprenant une étape de fermeture de la cavité comprenant au moins l'un parmi :
(a) injection ou coulage d'une résine dans la cavité ;
(b) fixation d'une troisième couche sur la face externe de la deuxième couche de façon à recouvrir la cavité ; et
(c) préalablement à l'insertion du module dans la cavité, la formation par moulage d'une couche de résine sur la deuxième face du module ; et
(d) fixation d'un dispositif électronique (tel qu'un écran LCD ou une batterie par exemple) sur la face externe de la deuxième couche de façon à recouvrir la cavité.

Dans une variante de réalisation particulière, l'étape de fermeture est réalisée par fixation de la troisième couche comme défini ci-dessus en (b), la puce étant recouverte d'une résine d'enrobage formée sur la deuxième face du module préalablement à son insertion dans ladite cavité, le procédé comprenant en outre le dépôt d'un élément adhésif entre la résine d'enrobage et la troisième couche de façon à fixer ensemble le module et la troisième couche.

Comme déjà indiqué, cette variante permet d'améliorer la résistance du module aux contraintes mécaniques telles que la pression par exemple.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 déjà décrite est une vue en section représentant, de manière schématique, la conception connue d'une carte à puce comprenant un module muni d'une puce et de plots de contact ;
- les figures 2 à 9 sont des vues en section ou en perspective représentant, de manière schématique, des cartes à puce conformes à des modes de réalisation particuliers de l'invention ainsi qu'un procédé de fabrication et des variantes selon l'invention permettant d'obtenir de telles cartes à puce ;
- les figures 9 et 10 sont des vues respectivement en section et de dessus représentant schématiquement un procédé de fabrication d'une pluralité de cartes à puce conformément à un mode de réalisation particulier de l'invention ; et
- la figure 11 est une vue en section représentant schématiquement une variante du mode de réalisation représenté en figure 3A.

### Description détaillée de plusieurs modes de réalisation

La présente invention concerne les cartes à puce ainsi que la fabrication de telles cartes. L'invention porte plus particulièrement sur la fabrication de cartes à puce comprenant un module muni d'une puce et de plots de contact, ces derniers étant accessibles par un dispositif externe à la carte.

Dans ce document, des exemples de mise en oeuvre de l'invention sont décrits en référence à des cartes à puce de format ID-1 conforme à la norme ISO 7816, bien que d'autres formats de la norme ISO 7816 ou un format quelconque puissent être envisagés dans le cadre de l'invention.

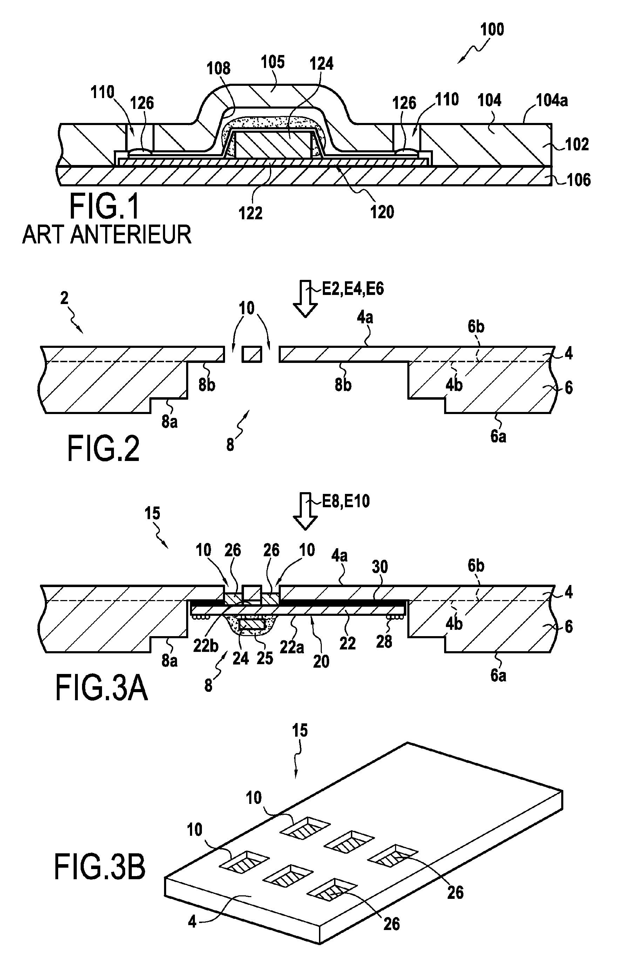

Une carte à puce 15 conforme à un premier mode de réalisation de l'invention et un exemple de procédé de fabrication d'une telle carte selon l'invention sont à présents décrit en référence aux **figures 2 à 5****.**

Ce premier mode de réalisation prévoit la fourniture (E2) d'un corps de carte 2. Comme indiqué ci-avant, on supposera ici que le corps de carte 2 est conforme au format ID-1, bien que d'autres formes et dimensions soient envisageables **(****figure 2****).**

Dans cet exemple, une cavité 8 est formée (E4) sur la face arrière 6a du corps de carte, cette cavité étant destinée à recevoir un module 20 qui sera décrit ultérieurement. Cette cavité 8 peut être réalisée par fraisage ou toutes autres techniques adaptées. Alternativement, le corps de carte 2 et la cavité 8 peuvent peut être formés simultanément par moulage **(****figure 2****).**

Le corps de carte comprend ici une couche supérieure 4 et une couche inférieure 6, ces deux couches s'étendant l'une contre l'autre et délimitant collectivement la cavité 8. Dans cet exemple, l'ouverture ménagée dans la couche inférieure 6 délimite les bords de la cavité 8 tandis qu'une portion 8b de la face interne 4b de la couche supérieure 4 forme le fond de la cavité 8.

On comprendra que la délimitation du corps de carte en une première couche 4 et une deuxième couche 6 est ici purement artificielle puisque, dans cet exemple, les couches 4 et 6 sont deux parties intégrantes d'une même pièce. Cette séparation artificielle a pour but de différencier la partie du corps de carte 2 formant le fond de la cavité 8 de celle formant les bords de cette même cavité 8.

Alternativement, les couches 4 et 6 peuvent être deux couches distinctes fixées l'une à l'autre par une méthode de fixation appropriée (collage, lamination...) de la face interne 4b de la première couche 4 sur la face interne 6b de la deuxième couche 6. L'ouverture dans la couche inférieure 6 délimitant la cavité 8 peut être réalisée avant ou après report sur la première couche 4. Le cas échéant, la première couche peut également délimiter une partie des bords de la cavité.

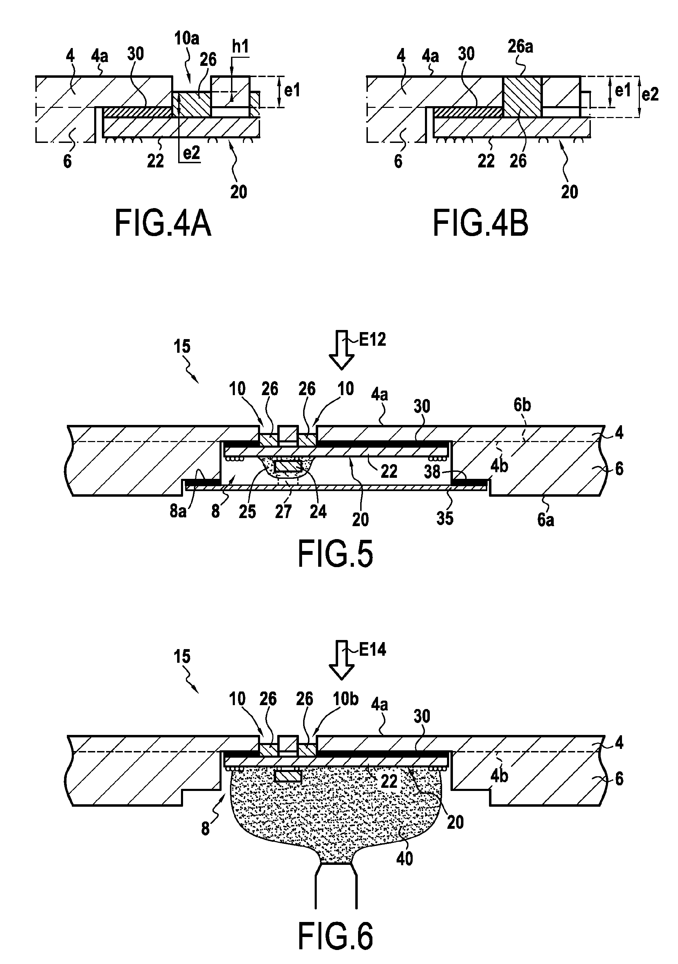

La cavité 8 peut présenter divers formes et dimensions selon les besoins, étant entendu que la cavité doit pouvoir accueillir un module comme expliqué ci-après. Bien que cela ne soit pas obligatoire, la cavité 8 comprend ici un premier évidement 8a formant une marche 8b sur une portion périphérique de la cavité 8. L'objet de cette marche 8b sera décrit plus en détail en référence à la **figure 5****.**

Au moins un orifice traversant 10 est par ailleurs formé (E6) dans la portion de la face interne 4b formant le fond 8b de la cavité 8 **(****figure 2****).** On envisage ici un cas où le nombre d'orifices traversants 10 s'élève à six, ce nombre pouvant toutefois être adaptés aux besoins.

Chaque orifice 10 est apte à recevoir au moins un plot de contact 26 qui sera décrit ultérieurement. Ces plots de contact sont électriquement conducteurs et permettent la mise en contact du module avec un dispositif extérieur.

Les orifices 10 peuvent être réalisés par fraisage avant ou après la formation de la cavité 8. Alternativement, le corps de carte 2, la cavité 8 et les orifices 10 peuvent être formés simultanément par moulage.

Comme représenté en **figures 3A et 3B****,** un module 20 est inséré (E8) dans la cavité 8 puis fixé (E10) au corps de carte 2 afin de former une carte à puce 15.

Le module 20 comporte un substrat 22, ce dernier comprenant au moins un plot de contact 26 sur une première face 22b et une puce 24 sur sa face opposée 22a. Le nombre et la disposition des plots de contact 26 du module 20 sont de préférence adaptés au nombre et à la disposition des orifices traversants 26 ménagés dans le corps de carte 2.

Dans un cas particulier, les plots de contact constituent des plages de contact conforme à la norme ISO 7816.

Les plots de contact 26 sont ici de forme sensiblement rectangulaire, d'autres formes étant envisageables. De façon préférée, la forme et les dimensions des plots de contact sont complémentaires de celles de leur orifice respectif.

A titre d'exemple, on supposera ici que le module 20 comporte six plots de contact sur sa première face 22b, ces plots étant configurés pour pouvoir chacun être insérés dans un orifice 10 dédié du corps de carte. Alternativement, un orifice 10 peut être configuré pour recevoir une pluralité de plots de contact 26 disposés de façon adjacente les uns aux autres sur la première face 22b du module.

La puce 24 est ici reliée électriquement aux plots de contact 26, par des moyens connus de l'homme du métier, tels que des fils d'or ou au moyen par exemple de pistes électriquement conductrices ménagées dans et/ou sur le substrat 22.

De façon facultative, la puce 24 peut être recouverte d'une résine d'enrobage (ou d'encapsulation) 25 formée sur la deuxième face 22a du module 20 préalablement à l'insertion du module 20 dans la cavité 8. Cette résine 25 permet d'améliorer le maintien de la puce 24 sur le substrat 22 du module 20.

Suite à l'étape E8, le substrat et la puce 24 sont entièrement reçus dans la cavité 8, dans l'épaisseur de la couche inférieure 6 (ou deuxième couche 6) du corps de carte 2. Ce positionnement du substrat 22 et de la puce 24 dans la cavité 8 permet de s'affranchir d'avantage des variations en positionnement de la couche inférieure, et permet donc de contrôler avec plus de précision le positionnement des plots de contact par rapport à la face supérieure de la carte à puce.

De plus, comme représenté en **figure 3A****,** le module 20 peut comporter une antenne 28 sur la deuxième face 22a. Cette antenne est connectée électriquement à la puce et permet par exemple la mise en oeuvre d'applications RFID.

Au cours de l'étape E8, le module 20 est donc inséré dans la cavité 8 de sorte que la première face 22b comportant les plots de contact 26 soit face au fond 8b de la cavité 8.

Conformément à l'invention, le module 20 est ainsi fixé (E10) au corps de carte 2 de sorte que la première face 22b du module 20 est montée en appui contre la face interne 4b (et plus particulièrement contre le fond de cavité 8b dans le cas présent) de la première couche 4. Cette fixation est réalisée de sorte que chaque plot de contact 26 s'engage dans un orifice traversant 10 respectif de façon à être accessible par un dispositif externe (non représenté) depuis la première face 4a du corps de carte 2.

Dans cet exemple, le module 20 est collé au fond de la cavité 8 au moyen d'une couche adhésive 30, toutes autres méthodes de fixation appropriée pouvant être envisagées dans le cadre de l'invention.

Comme représenté en **figure 4A****,** la première couche 4 présente une épaisseur el pouvant par exemple être approximativement égale à 80 µm. Les plots de contact 26 présentent quant à eux une épaisseur e2 comprise par exemple entre 30 et 80 µm, d'autres valeurs étant toutefois envisageables selon les besoins.

Comme indiqué ci-avant, les plots de contact 26 sont insérés dans des orifices traversants respectifs 10 de la première couche 4 de façon à être accessibles depuis la face externe 4a de la première face 4.

Le procédé de fabrication de l'invention permet avantageusement de contrôler avec précision la différence de hauteur h1 (i.e. la distance selon l'axe longitudinal des orifices) pouvant exister entre la face externe 4a de la première couche 4 et la surface libre 26a de chaque plot 26 une fois le module 20 en position sur la face interne 4b de la première couche 4.

Cet écart de niveau h1 peut être négatif (i.e. le plot de contact 26 est alors en retrait dans l'orifice 10 vis-à-vis de la face externe 4a de façon à former un renfoncement à la surface de la carte 15, comme représenté en **figure 4A****)** ou positif (i.e. le plot de contact 26 s'étend alors à travers l'orifice 10 de façon à former une saillie à la surface de la carte 15).

Dans un exemple particulier, cet écart h1 est compris entre -100 µm et +100 µm (i.e. un écart inférieur ou égal à 100 µm en valeur absolue) conformément à la norme ISO 7816.

La **figure 4B** représente une variante de réalisation particulière selon laquelle la différence de hauteur h1 est nulle (ou approximativement nulle) de sorte que la surface libre 26a du plot de contact 26 considéré affleure la face externe 4a de la première couche 4. Dans un cas particulier, la surface libre 26a de chaque plot de contact 26 affleure la surface externe 4a.

Dans l'exemple envisagé ici, la cavité 8 débouche sur la face externe 6a de la deuxième couche 6, c'est-à-dire sur la face de la deuxième couche 6 opposée à la face interne 4b de la première couche 4.

Il est possible de fermer (E12) cette cavité 8 à l'aide de moyens de fermeture adaptés afin notamment de cacher le module 20 et de protéger celui-ci de la poussière etc. En **figure 5****,** la fermeture de la cavité 8 est réalisée (E12) au moyen d'une couche de fermeture 35 (en plastique par exemple) qui est fixée sur la face externe 6a de la deuxième couche (ou sur une portion périphérique de la cavité 8) de façon à recouvrir la cavité 8.

Dans l'exemple considéré, la couche de fermeture 35 est fixée sur la portion périphérique 8a de la cavité 8 au moyen d'une bande adhésive 38.

Cette couche de fermeture 35 est de préférence fixée de façon à affleurer la face externe 6a de la deuxième couche 6. L'alignement des niveaux de la face externe 6a et de la couche de fermeture 35 est réalisé en adaptant la profondeur de la première marche 8a, l'épaisseur de la couche adhésive 38 et l'épaisseur de la couche de fermeture 35.

Dans le mode de réalisation représenté en **figure 5****,** il est en outre possible de déposer un élément adhésif 27 entre la résine d'enrobage 25 et la couche de fermeture 35 de façon à fixer ensemble le module 20 et la couche de fermeture 35. Cet élément adhésif 27 peut être une goutte de colle (ou tout autre adhésif approprié) déposée par exemple au sommet de la résine d'enrobage 25 recouvrant la puce 24. La couche de fermeture 35 est ensuite laminée sur la face externe de la couche inférieure 6 du corps de carte de façon à rentrer en contact avec la goutte de colle 27.

L'ajout de cet élément adhésif 27 est facultatif mais permet avantageusement de former un lien (ou entretoise) entre le module 20 et la couche de fermeture 35. Cette variante permet d'améliorer la résistance du module 20 aux contraintes mécaniques telles que la pression.

Selon une variante du mode de réalisation de la **figure 5****,** la fermeture de la cavité 8 est réalisée (E12) au moyen d'un dispositif (ou composant) électronique (non représenté) qui est fixé sur la face externe 6a de la deuxième couche 6 (ou sur une portion périphérique de la cavité 8) de façon analogue à la couche de fermeture 35 représentée en **figure 5** de sorte à recouvrir la cavité 8. Ce dispositif électronique peut être un écran LCD par exemple ou encore une batterie, ce dispositif étant fixé au moyen par exemple de la couche adhésive 38. Dans cette variante, la liaison électrique entre le module 20 et le dispositif électrique est par exemple assurée au moyen d'une surépaisseur formée dans la cavité 8 et prenant la forme d'au moins un « bump » (i.e. élément en alliage métallique comprenant des pistes conductrices), ce bump étant en contact avec une portion de la face interne du dispositif électrique d'une part, et avec une portion de la deuxième face 22a du module 20 d'autre part.

D'autres formes de cavité et de couche de fermeture sont toutefois envisageables. Selon une alternative, la cavité 8 est dépourvue de la marche 8a et la couche de fermeture est fixée directement sur la face arrière du corps de carte.

Alternativement, il est possible de fermer la cavité 8 en remplissant celle-ci au moins partiellement d'une résine 40 de basse viscosité (e.g. de polyuréthane) ou d'une résine 40 de moulage, cette résine étant injectée (E14) de façon à recouvrir l'ensemble du module 20 **(****figure 6****).**

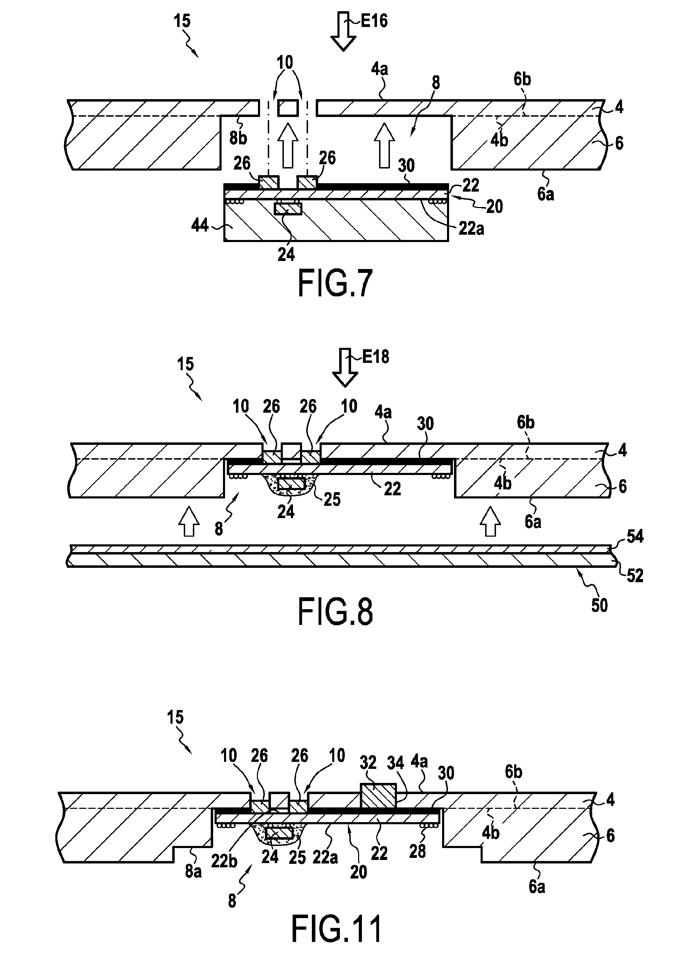

Selon encore une autre alternative représentée en **figure 7** (E16), le module 20 comprend, avant même son insertion dans la cavité 8, une couche de résine 44 moulée (« transfert molding resin ») recouvrant l'ensemble de la deuxième face 22a du substrat 22. Dans cet exemple, la cavité est dépourvue de la marche 8a.

La **figure 8** représente encore une autre alternative selon laquelle une couche additionnelle 50 est fixée (E18) par lamination sur toute la face externe 6a de la deuxième couche 6. Cette couche 50 peut comprendre une sous-couche 52 (en plastique par exemple) sur laquelle est disposée une couche d'adhésion 54 appropriée, à savoir une couche activable par pression à chaud dans le cas présent (l'utilisation d'une couche d'adhésif à fusion à froid ou « adhesive cold melt » est également possible). La couche d'adhésion 52 est située à l'interface de collage entre la face externe 6a et la couche additionnelle 52. Dans cette alternative, il est également possible de placer le cas échéant un élément adhésif (non représenté) entre la résine d'enrobage 25 et la couche d'adhésion 54 de façon analogue à l'ajout de l'élément adhésif 27 évoqué précédemment en référence à la **figure 5****.**

Plus généralement, il est possible de combiner plusieurs des variantes décrites ci-dessus pour fermer la cavité 8.

Selon une variante particulière, la fermeture de la cavité est réalisée :
- en injectant ou en coulant une résine 40 dans la cavité ; et
- en fixant une troisième couche 35 ou 50 sur la face externe 6a de la deuxième couche 6 de façon à recouvrir la cavité 8.

Dans ce cas, préalablement à l'insertion du module 20 dans la cavité 8, on peut en outre former par moulage une couche de résine 44 sur la deuxième face 22a du module 20. Dans ce cas, la résine moulée 44 est en contact avec la résine 40 injectée ou coulée dans la cavité.

Selon une variante de l'invention représentée en **figure 11****,** le module comporte au moins un composant électronique 32, tel qu'un afficheur, un capteur d'empreinte ou une diode électroluminescente, disposé sur la première face 22b du module 20 et la première couche 4 comprend en outre un orifice supplémentaire 34 apte à recevoir le composant électronique 32. Lors de l'étape d'insertion E8, le composant électronique 32 est inséré dans l'orifice supplémentaire 34 de sorte à être accessible visuellement ou tactilement depuis la face externe 4a du corps de carte 2. A titre d'exemple, le composant 32 représenté en **figure 11** traverse l'orifice supplémentaire 34 de sorte à former une protrusion s'étendant depuis la surface externe 4a du corps de carte 2.

De même que pour les orifices traversants 10, le corps de carte 2 peut comporter un orifice supplémentaire dédié pour chaque composant électronique 32 disposé sur la première face 22b du module 20 ou, alternativement, un même orifice supplémentaire peut être configuré pour recevoir simultanément plusieurs composants électroniques 32.

A noter que, de façon alternative, la cavité dans laquelle est inséré le module peut être une cavité non débouchante. La première couche et la deuxième couche sont par exemple assemblées l'une à l'autre de façon à accueillir dans la cavité non débouchante le module selon l'invention.

Comme illustré dans les figures 2, 3A, 5-8 et 11, le substrat peut être plan. De plus, le substrat est entièrement reçu dans la cavité, dans l'épaisseur de la deuxième couche du corps de carte.

En outre, la première couche 4 et/ou la deuxième couche 6 peut être en plastique.

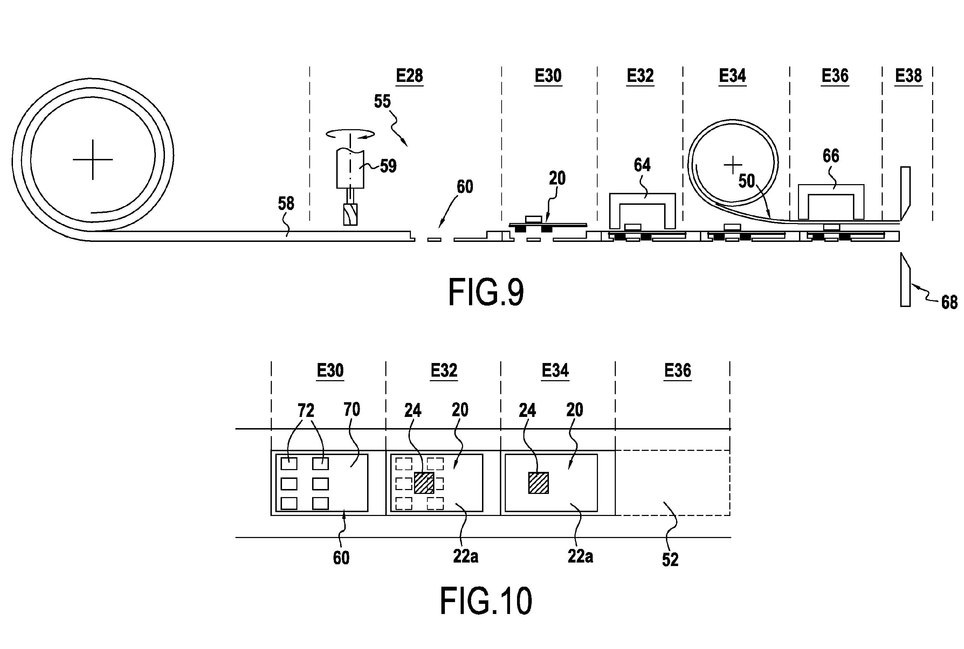

Un procédé de fabrication collectif d'une pluralité de cartes à puce selon un mode de réalisation particulier de l'invention est à présent décrit en référence aux **figures 9 et 10****.**

Une bobine 58 de feuilles en plastique est déroulée progressivement jusqu'à un premier poste de fraisage (ou de découpe) où des motifs 60 sont réalisés (E28) au moyen d'un dispositif de fraisage (ou de découpe) 59. Puis les feuilles comportant ces motifs sont transportées successivement aux différents postes opérationnels chargés de réaliser les étapes de fabrication successives E30 à E38.

Les motifs 60 comprennent une cavité débouchante (ou évidement) 70 au fond desquelles sont formés des orifices traversants 72 **(****figure 10****).**

Au cours d'une étape E30, un module 20 est inséré (au moyen d'un dispositif « pick and place ») dans la cavité 70 prévue à cet effet de sorte que chaque plot de contact présent sur la première face du substrat du module s'engage dans l'un des orifices traversant 72.

Ainsi, la formation de la cavité 70 est effectuée avant la fixation du module 20.

Une pression à chaud est ensuite appliquée (E32) au moyen d'une presse 64 sur la deuxième face du module comportant la puce 24.

Une couche comprenant une sous-couche plastique et une sous-couche d'adhésif activable par exemple par pression à chaud (comme représenté en **figure 8****)** est ensuite disposée (E34) sur les motifs de façon à recouvrir les cavités dans lesquelles sont disposés les modules 20.

Cette couche d'adhésion est activée (E36) par la suite par lamination au moyen d'un dispositif 66.

Le module 20 est ainsi introduit dans la cavité 70 avant de procéder à une lamination.

Une étape de découpe (« card punch ») E38 est ensuite réalisée afin de découper les cartes à puce selon le format souhaité.

En résumé, conformément à l'invention, le module au sens de l'invention est fixé au corps de carte de sorte que la première face dudit module est montée en appui contre la face interne de la première couche (le cas échéant au fond d'une cavité réalisée à cet effet). Cette fixation est réalisée de sorte que chaque plot de contact s'engage dans un orifice traversant respectif de façon à être accessible par un dispositif externe depuis la première face du corps de carte. Un tel dispositif externe est par exemple un terminal de lecture de cartes bancaire. L'accès aux plots de contact se fait par exemple au moyen de broches de contact dont est muni le dispositif externe, ces broches étant configurées pour rentrer en contact avec la surface libre des plots de contact.

Le procédé de fabrication de l'invention permet avantageusement de contrôler avec précision la différence de hauteur pouvant exister entre la face externe de la première couche et la surface libre de chaque plot une fois le module en position sur la face interne de la première couche.

L'invention permet ainsi d'améliorer le positionnement des plots de contact par rapport à la face supérieure de la carte à puce, ce positionnement étant critique pour permettre un accès dans de bonnes conditions d'un dispositif externe aux plots de contact de la carte. Le positionnement en hauteur des plots de contact n'est en effet plus dépendant des variations en épaisseur de la couche supérieure et/ou en positionnement de la couche inférieure ou encore de l'épaisseur d'une couche adhésive pouvant se trouver entre les couches supérieure et inférieure du corps de carte.

Il est ainsi possible, pour un corps de carte donné, de sélectionner parmi plusieurs modules afin d'y monter le module le plus adapté selon les besoins (le module ayant en particulier l'épaisseur de plot de contact souhaitée), de sorte à obtenir la différence de hauteur souhaitée entre la face avant de la carte et les surfaces libres des plots de contact. Un même corps de carte pourra ainsi accueillir des modules ayant différentes tailles de plot de contact.

Par ailleurs, contrairement au modèle antérieur de carte à puce représenté en **figure 1****,** la présente invention permet également de ménager le module dans le corps de carte et d'engager les plots de contact dans les orifices prévus à cet effet sans pour autant que la forme ou le contour du module soit apparent en relief sur la face avant (côté plot de contact) de la carte à puce (cf. le relief 105 en **figure 1****).** L'esthétique s'en trouve ainsi amélioré et le module est moins exposé aux chocs externes.

Un homme du métier comprendra que les modes de réalisation et variantes décrits ci-avant ne constituent que des exemples non limitatifs de mise en oeuvre de l'invention. En particulier, l'homme du métier pourra envisager une quelconque combinaison des variantes et modes de réalisation décrits ci-avant afin de répondre à un besoin bien particulier.

## Revendications

1. Carte à puce (15) comprenant :
- un module (20) comportant un substrat (22) comprenant au moins un plot de contact (26) sur une première face (22b) du substrat et une puce (24) montée sur une deuxième face (22a) du substrat opposée à ladite première face (22b), la puce (24) étant reliée électriquement audit plot de contact (26) ; et
- un corps de carte (2) comportant au moins une première couche (4) délimitée par une face externe (4a) et une face interne (4b) ;
dans laquelle :
- la première couche (4) comporte au moins un orifice traversant (10) adapté pour recevoir au moins un dit plot de contact (26) ; et
- le module (20) est fixé au corps de carte (2) de sorte que ladite première face (22b) du module est montée en appui contre la face interne (4b) de la première couche (4), ledit au moins un plot de contact (26) étant engagé dans ledit orifice (10) de façon à être accessible par un dispositif externe depuis la première face (4a) du corps de carte (2).

2. Carte à puce selon la revendication 1, dans laquelle la différence de hauteur entre la surface libre (26a) du plot de contact (26) et la face externe (4a) de la première couche (4) est comprise entre 0 et 100 µm.

3. Carte à puce selon la revendication 1 ou 2, dans laquelle le corps de carte comprend une deuxième couche (6) s'étendant sur la face interne (4b) de la première couche (4), les première et deuxième couches délimitant collectivement une cavité (8) dans laquelle est inséré le module (20).

4. Carte à puce selon la revendication 3, dans laquelle les première et deuxième couches (4, 6) sont deux parties intégrantes d'une même pièce (2).

5. Carte à puce selon la revendication 3 ou 4, dans laquelle ladite cavité débouche sur la face externe de la deuxième couche opposée à la face interne de la première couche, la carte à puce comprenant en outre des moyens de fermeture de ladite cavité comprenant au moins l'un parmi :
(a) de la résine (40) injectée ou coulée dans la cavité ;
(b) une troisième couche (35, 50) fixée sur la face externe de la deuxième couche de façon à recouvrir la cavité ;
(c) une couche de résine (44) moulée formée sur la deuxième face (22a) du module (20) préalablement à son insertion dans ladite cavité (8) ; et
(d) un dispositif électronique fixé sur la face externe (6a) de la deuxième couche (6) de façon à recouvrir la cavité (8).

6. Carte à puce selon la revendication 5, dans laquelle les moyens de fermeture sont formés par ladite troisième couche définie en (b), la puce (24) étant recouverte d'une résine d'enrobage (25) formée sur la deuxième face (22a) du module (20) préalablement à son insertion dans ladite cavité (8), le module étant fixé à la troisième couche (35, 50) au moyen d'un élément adhésif (27) disposé entre la résine d'enrobage et la troisième couche.

7. Carte à puce selon l'une quelconque des revendications 1 à 6, dans laquelle le substrat du module comprend une pluralité de plots de contact sur sa première face, chaque plot étant engagé dans un orifice traversant dédié de la première couche.

8. Carte à puce selon l'une quelconque des revendications 1 à 7, dans laquelle le substrat du module comprend une pluralité de plots de contact sur sa première face, lesdits plots de contact étant adjacents les uns aux autres de sorte qu'ils sont engagés dans un même orifice traversant de la première couche.

9. Carte à puce selon l'une quelconque des revendications 1 à 8, dans laquelle le module (20) comporte un composant électronique, tel qu'un afficheur, un capteur d'empreinte ou une diode électroluminescente, disposé sur la première face (22b) du module (20), et dans laquelle ladite première couche (4) comprend en outre un orifice supplémentaire, le composant électronique étant inséré dans l'orifice supplémentaire de sorte à être accessible depuis la première face (4a) du corps de carte (2).

10. Procédé de fabrication d'une carte à puce (15) comprenant :
- un module (20) comportant un substrat (22) comprenant au moins un plot de contact (26) sur une première face (22b) du substrat (22) et une puce (24) montée sur une deuxième face (22a) du substrat opposée à ladite première face (22b), la puce (24) étant reliée électriquement audit plot de contact (26) ; et
- un corps de carte (2) comportant au moins une première couche (4) délimitée par une face externe (4a) et une face interne (4b) ;
le procédé de fabrication comprenant :
- la formation (E6) dans la première couche (4) d'au moins un orifice traversant (10) adapté pour recevoir au moins un plot de contact (26) ; et
- la fixation (E8, E10) du module (20) au corps de carte (2) de sorte que ladite première face (22b) du module est montée en appui contre la face interne (4b) de la première couche (4), ledit au moins un plot de contact (26) s'engageant dans ledit orifice (10) de façon à être accessible par un dispositif externe depuis la première face (4a) du corps de carte (2).

11. Procédé selon la revendication 10, dans lequel la différence de hauteur entre la surface libre (26a) du plot de contact (26) et la face externe (4a) de la première couche (4) est comprise entre 0 et 100 µm.

12. Procédé selon la revendication 10 ou 11, dans lequel le corps de carte comprend une deuxième couche (6) s'étendant sur la face interne (4b) de la première couche (4), le procédé comprenant la formation (E4) d'une cavité (8) dans ladite deuxième couche (6), une portion (8b) de la face interne (4b) de la première couche (4) formant le fond de ladite cavité (8),
la fixation (E8, E10) dudit module (20) comprenant l'insertion (E8) du module (20) dans ladite cavité (8) et le montage (E10) du module sur le fond de ladite cavité.

13. Procédé selon la revendication 12, dans lequel les première et deuxième couches (4, 6) sont deux parties intégrantes d'une même pièce (2).

14. Procédé selon la revendication 12 ou 13, dans lequel ladite cavité débouche sur la face externe de la deuxième couche opposée à la face interne de la première couche, le procédé comprend une étape de fermeture de la cavité comprenant au moins l'un parmi :
(a) injection ou coulage d'une résine (40) dans la cavité ;
(b) fixation d'une troisième couche (35, 50) sur la face externe (6a) de la deuxième couche (6) de façon à recouvrir la cavité (8) ;
(c) préalablement à l'insertion du module (20) dans la cavité (8), la formation par moulage d'une couche de résine (44) sur la deuxième face (22a) du module (20) ; et
(d) fixation d'un dispositif électronique sur la face externe (6a) de la deuxième couche (6) de façon à recouvrir la cavité (8).

15. Procédé selon la revendication 14, dans lequel l'étape de fermeture est réalisée par fixation de ladite troisième couche (35, 50) définie en (b), la puce (24) étant recouverte d'une résine d'enrobage (25) formée sur la deuxième face (22a) du module (20) préalablement à son insertion dans ladite cavité (8),
le procédé comprenant en outre le dépôt d'un élément adhésif (27) entre la résine d'enrobage et la troisième couche de façon à fixer ensemble le module et la troisième couche.
